# EUROPEAN PATENT SPECIFICATION

(11) **EP 4 672 174 B1**
(45) Date of publication and mention of the grant of the patent: **29.07.2026**
(21) Application number: 24184872.0
(22) Date of filing: 27.06.2024
(51) Int. Cl.: G06V 10/82, G06V 20/58

(54) **NEURAL NETWORK-BASED ANALYSIS OF IMAGES CAPTURED UNDER DIFFERENT VISIBILITY CONDITIONS**
AUF NEURONALEM NETZWERK BASIERENDE ANALYSE VON UNTER VERSCHIEDENEN SICHTBARKEITSBEDINGUNGEN AUFGENOMMENEN BILDERN
ANALYSE D'IMAGES CAPTURÉES DANS DES CONDITIONS DE VISIBILITÉ DIFFÉRENTES BASÉE SUR UN RÉSEAU NEURONAL

(43) Date of publication of application: 31.12.2025
(73) Proprietor: Axis AB, 223 69 Lund (SE)
(72) Inventor: Hassbring, Ludvig, 223 69 Lund (SE); Yuan, Song, 223 69 Lund (SE)
(74) Representative: AWA Sweden AB

(56) References cited:
- US-B2- 10 586 132
- US-B2- 11 447 151

## Description

### Technical field

The present disclosure generally relates to the field of image analysis using artificial neural networks (ANNs). In particular, the present disclosure relates to ANN-based analysis of images of a scene captured under different visibility conditions, such as caused by different levels of fog and/or smog.

### Background

Artificial neural networks (ANNs) have proven useful for a variety of machine learning tasks related to analysis/processing of images, such as for both still and video image content. Examples of tasks suitable for ANN-based analysis include e.g. classification, segmentation and/or detection of objects in images, depth analysis of images, and similar.

ANN-based machine learning solutions are, however, often demanding in terms of the computational power required to implement them, both for training and for actual inference. This may, as a consequence, prevent such solutions from being implementable on for example edge-devices that often have more limited computational resources, and especially if there is a need to implement multiple solutions for carrying out different particular tasks on a same device. US 11 447 151 B2 discloses a system for detecting objects in a scene under rainy weather conditions. US 10 586 132 B2 discloses a system for automated driving of a vehicle to detect and classify pedestrians and traffic signs and other vehicles based on environmental conditions around the vehicle.

The present disclosure seeks to further develop such ANN-based machine learning solutions for image analysis, and to mitigate the above-mentioned shortcomings thereof.

### Summary

For the above-stated purpose, the present disclosure proposes an improved method, device, computer program and computer program product for analyzing images of a scene, taking into account that a visibility condition of the scene can change over time, and as defined by the accompanying independent claims. Various embodiments are defined by the accompanying dependent claims.

According to a first aspect of the present disclosure, there is provided a (computer-implemented) method of analyzing images of a scene captured under different visibility conditions. The method includes obtaining images of a scene captured by one or more cameras. The method further includes, for each of the images, i) obtaining an indication of an actual or assumed visibility at the scene when the image was captured; ii) selecting, based on the indicated visibility, an ANN architecture from a plurality of ANN architectures, wherein the ANN architectures are each trained for image analysis/processing but configured for different input image resolutions, and iii) analyzing the image using the selected ANN architecture.

The proposed solution improves upon contemporary technology in that it enables to decide which particular ANN architecture to use based on the visibility condition of the scene. As a consequence, the use of a more complex, higher-resolution ANN architecture may thus be avoided in scenes where the visibility conditions are such that the higher complexity is not needed and/or useful, and computational resources may thus be freed by instead selecting to use a less complex, lower-resolution ANN architecture, and instead made available for the performing of other tasks. Phrased differently, and as will be elaborated on later herein, the proposed solution makes use of the fact that there may be visibility conditions in which use of a higher-resolution ANN architecture does not provide any substantial benefit, and allows to instead use a lower-resolution ANN architecture for the same purpose which reduces the computational complexity.

The method includes changing, if necessary and before operation iii), a resolution of the image to match that of the selected ANN architecture. For example, the visibility condition of the scene may result in selecting an ANN architecture trained to operate on images having a lower resolution than that of the image from the camera, and the image from the camera may thus be e.g. downsampled to match such a lower resolution.

Selecting which ANN architecture to use includes selecting a lower-resolution ANN architecture for a lower visibility and a higher-resolution ANN architecture for a higher visibility. The lower-resolution ANN architecture is configured such that its operation consumes less computer processing resources and/or time than the higher-resolution ANN architecture. For example, as used herein, a "lower-resolution" ANN architecture may have fewer input neurons than a "higher-resolution" ANN architecture, but still be trained to perform a same type of task. For example, if the task is object detection, reducing the resolution due to the visibility being low may still allow to produce accurate results, as the image resolution is often more important for detecting smaller objects, e.g. objects further away from the camera. For low or lower-visibility conditions, such objects are likely to be hidden by e.g. fog and/or smog anyway, and would thus not be detected even if still using the higher-resolution ANN architecture. The proposed solution thus enables to use a lower-resolution ANN architecture to produce approximately a same outcome, with less consumption of computational resources (and/or during a shorter time).

In some embodiments, analyzing the image may include performing at least one of object detection, object classification, object segmentation, depth analysis, and keypoint detection in the image. It is envisaged that all of these operations are such that during lower-visibility conditions, the use of higher-resolution ANN architectures may provide little or no benefit over the use of a lower-resolution architecture.

In some embodiments, obtaining the indication of the visibility may include detecting fog and/or smog levels in the scene. Fog and/or smog may often be the cause of reduced visibility, especially as smog is already, or is becoming, an issue in e.g. larger cities and other environments wherein e.g. monitoring cameras are often found and used. Fog and/or smog may reduce the range of the camera, as objects further away will be only partially or completely hidden by the fog and/or smog. Fog and/or smog levels in the scene thus correlates well with the range of the camera.

In some embodiments, detecting fog and/or smog levels in the scene may include evaluating contrast and/or edges in the image. Additional particles in the air due to fog and/or smog may cause additional scattering of light, and result in reduced contrast and reduction of high-frequency components in the image, which can be properly assessed using e.g. edge detection methods.

In some embodiments, detecting fog and/or smog levels in the scene may include using an ANN architecture trained for this purpose.

In some embodiments, obtaining the indication of the visibility may include mapping of detected fog and/or smog levels to object detection performance. This may for example be performed by approximating how far one can realistically see in various levels of fog and/or smog, as evaluated in e.g. a laboratory environment, and/or by assessing at what levels of fog and/or smog object detection starts to detect e.g. people or other objects of interest. Such experiments may be conducted over time for different (naturally or artificially) occurring levels of fog and/or smog, and the results may be stored and analyzed to derive an approximate range of the camera as a function of fog and/or smog levels.

In some embodiments, obtaining the indication of the visibility may include making predictions based on previously determined fog and/or smog level patterns. For example, historically recorded and/or estimated fog and/or smog levels may be stored and analyze to make predictions about future fog and/or smog levels, based on e.g. time-series analysis and similar. Other examples may include to e.g. detect that fog and/or smog is more likely to be present during certain hours of the day, e.g. during mornings, during afternoon, and similar, and to make assumptions about a current fog and/or smog level based on e.g. a current time of the day, and similar.

In some embodiments, obtaining the indication of the visibility may include using current and/or historical meteorological data pertinent to the scene. For example, there may be weather forecasts that also includes an estimate of fog and/or smog levels or even about visibility distance, such as often provided by e.g. METAR data as used by e.g. aircraft pilots. Other examples may include to e.g. map how other meteorological parameters such as humidity, temperature, wind speed, etc., correlate to fog and/or smog, and to use such correlations to predict fog and/or smog levels based on such other parameters.

In some embodiments, obtaining the indication of the visibility may include receiving data from one or more sensors configured for this purpose, such as fog detectors, smog detectors, visibility detectors, and similar. Such detectors may for example be provided as part of the camera, and/or positioned at one or more other positions in the scene and/or at one or more other places.

According to a second aspect of the present disclosure, there is provided a camera, such as a monitoring camera or similar. The camera includes at least one image sensor for capturing images of a scene (wherein a "scene" may for example be defined as everything within the field-of-view, FOV, of the camera when the image is captured, or e.g. as a geographical location and/or area). The camera further includes processing circuitry configured to perform the method of the first aspect.

In some examples, the processing circuitry may be further configured to perform any embodiment of the method of the first aspect.

According to a third aspect of the present disclosure, there is provided a computer program that includes computer code that, when run on processing circuitry of a device such as a camera, causes the device to perform the method of the first aspect.

In some examples, the computer code may be further such that it causes the device to perform any embodiment of the method of the first aspect.

According to a fourth aspect of the present disclosure, there is provided a computer program product, including a computer-readable storage medium on which the computer program of the third aspect (or any embodiment thereof) is stored. As used herein, the computer-readable storage medium may e.g. be non-transitory, and be provided as e.g. a hard disk drive (HDD), solid state drive (SSD), USB flash drive, SD card, CD/DVD, and/or as any other storage medium capable of non-transitory storage of data. In other embodiments, the computer-readable storage medium may be transitory and e.g. correspond to a signal (electrical, optical, mechanical, or similar) present on e.g. a communication link, wire, or similar means of signal transferring, in which case the computer-readable storage medium is of course more of a data carrier than a data storing entity.

Other objects and advantages of the present disclosure will be apparent from the following detailed description, the drawings and the claims. Within the scope of the present disclosure, it is envisaged that all features and advantages described with reference to e.g. the method of the first aspect are relevant for, apply to, and may be used in combination with also the camera of the second aspect, the computer program of the third aspect, and the computer program product of the fourth aspect, and vice versa.

### Brief description of the drawings

Exemplifying embodiments will be described below with reference to the accompanying drawings, on which:
Figure 1 shows schematic images of an example scene captured at different visibility conditions;
Figure 2 shows a functional block diagram illustrating various examples of a device according to the present disclosure;
Figure 3 shows a flow chart illustrating various examples of a method of image analysis according to the present disclosure;
Figures 4A and 4B schematically illustrates components and functional modules of various examples of a device according to the present disclosure, and
Figure 5 schematically illustrates examples of a computer program, computer program product and computer-readable storage medium according to the present disclosure.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the Figures, the (absolute or relative) sizes of elements and regions may be exaggerated or understated vis-à-vis their true values for illustrative purposes and, thus, are provided to illustrate the general structures of the embodiments.

### Detailed description

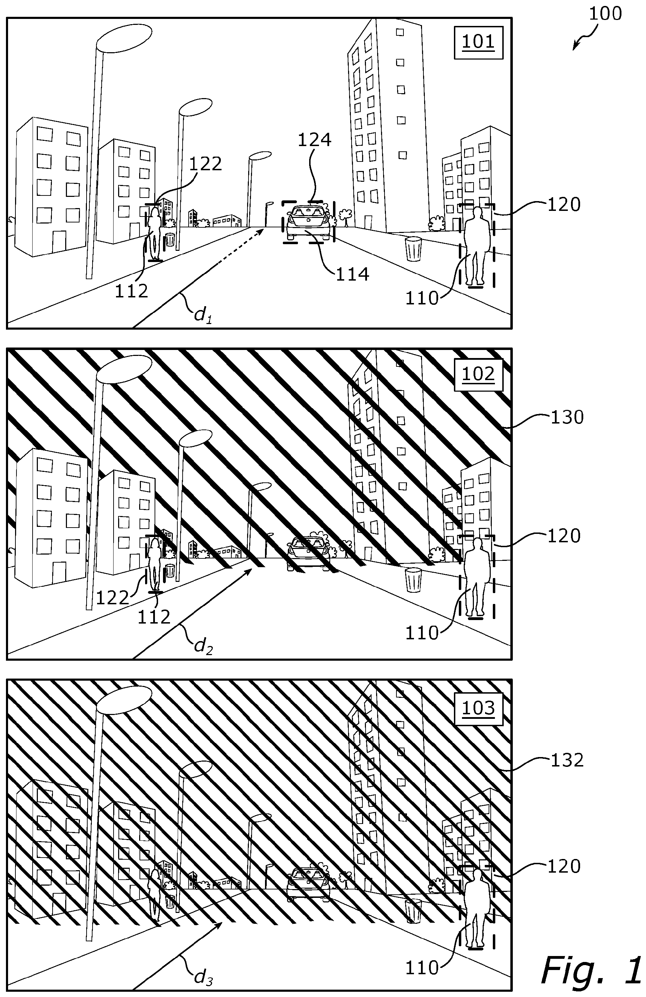

Figure 1 shows a collection 100 of images 101, 102 and 103 of a same scene, but captured at different visibility conditions. In the image 101, the visibility is good, and there is no visible fog and/or smog in the scene. The scene includes three example objects, namely a first person 110, a second person 112, and a vehicle 114. Out of the three objects, the first person 110 is located closest to the camera, followed by the second person 112 and then the vehicle 114. In the scene as captured by the first image 101, a visibility distance *d*₁ indicates the range of the camera in the current visibility conditions, and here extends from the camera towards infinity. As indicated by the dashed part of the arrow at *d*₁, the range of the camera (due to the clear visibility conditions) does not have a well-defined distant end, and may be considered sufficient to capture the full depth of the scene.

As envisaged herein, the image 101 may be analyzed/processed to for example perform object detection, to for example provide a respective bounding box 120, 122 and 124 around each of the objects 110, 112 and 124, as illustrated in the Figure.

A detection range of an object detection algorithm may depend on a resolution of the image, and increase with increasing image resolution and decrease with decreasing image resolution. As used herein, a "detection range" of the object detection algorithm may be defined as a distance into the scene up to which the algorithm successfully detects objects for which it has been trained. Consequently, to detect objects that are further away from the camera may require a higher resolution input image, while an input image resolution required to detect objects that are closer to the camera may be less. In the image 101, detection of e.g. the more distant objects, such as the vehicle 114, likely requires the use of an ANN architecture trained to operate on higher-resolution images.

In the image 102, moderate fog and/or smog 130 is present in the scene, which reduces the visibility distance to a distance *d*₂ < *d*₁. As a consequence, only the first and second persons 110 and 112 are now clearly visible, and the object detection algorithm may struggle or fail to detect objects further away from the camera than *d*₂, such as for example the vehicle 114.

In the image 103, more severe fog and/or smog 132 is present in the scene, and reduces the visibility distance to a distance *d*₃ < *d*₂. In this example, only the first person 110 is still visible, and the object detection algorithm may struggle or fail to detect the vehicle 114 and second person 112, that are both (at least partially) hidden withing the fog and/or smog 132.

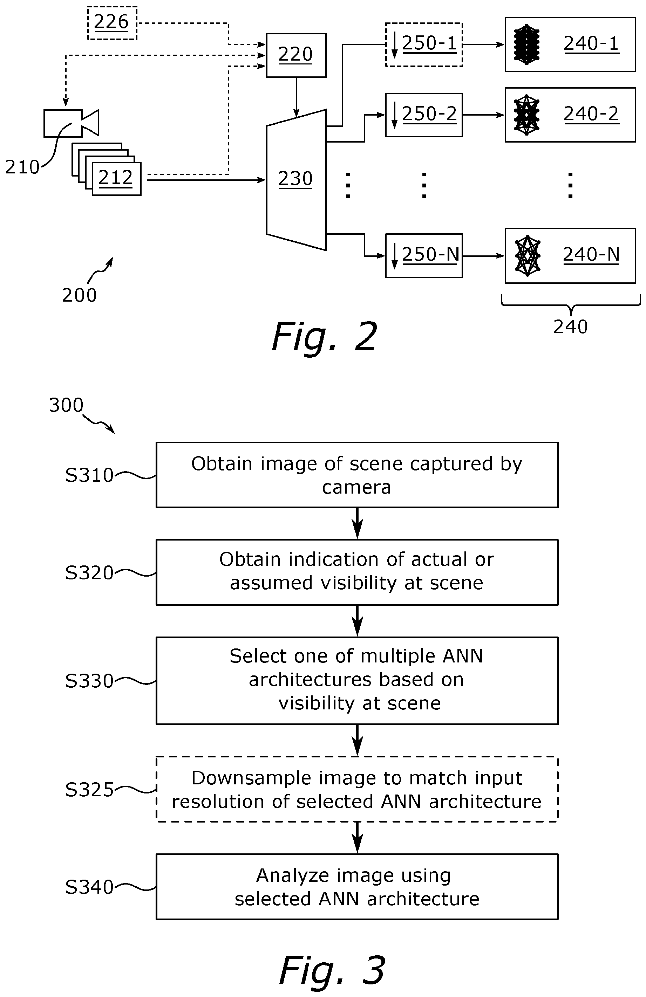

As will now be explained in more detail with reference also to Figures 2 and 3, the present disclosure envisages to improve the efficiency of image analysis by taking into account that some visibility conditions may allow to reduce the computational complexity of the image analysis while still obtaining same or similar results as if not making such a reduction. In particular, this may include to, in visibility conditions such as those in images 102 and 103, where the visibility distance *dᵢ* is lower than that of in the image 101, use a less computationally complex/demanding ANN architecture trained to operate on images with lower resolutions.

Figure 2 shows a functional block diagram of an example device 200 as envisaged herein, and Figure 3 shows a flow chart of an example method 300 performed by such a device. The device 200 obtains (as part of e.g. an operation S310 of the method 300) a plurality of images 212 of a scene captured by one or more cameras 210. The images 212 may for example be received directly from the camera, or from some other entity in possession of such images. The device 200 may also form part of one of the cameras 210, in which case the image 212 are received internally, e.g. from one or more image sensors of the camera configured to capture such images of the scene. The operation S310 may of course include receiving only a single, or at least fewer than all of the images 212 at once, and to repeat the subsequent operations of the method for each such image.

For each of the images 212, the device obtains (as part of e.g. an operation S320 of the method 300) an indication of an actual or assumed visibility at the scene when the image was captured. The indication may for example be generated by a visibility estimation block (or module) 220, which may base such a decision on e.g. the data found in the images 212 themselves, and/or from input from one or more other entities 226.

Based on the indicated visibility of the scene when each image was captured, i.e. based on an assumed visibility distance d for each image, the device selects (as part of e.g. an operation S330 of the method 300) from a plurality 240 of ANN architectures 240-1, 240-2, ..., 240-N (where N is an integer indicating a total number of such ANN architectures) that are trained for a same image analysis task, but which has been trained (and configured) to operate on input images of different resolutions. Such selection may for example be performed by implementing a demultiplexing functionality (as indicated by the block 230) which is controlled based on output from the visibility estimation block 220. For example, the indicated/estimated visibility distance d may be sorted into one of a plurality of visibility categories, and each such category may be associated with one of the plurality of ANN architectures 240. For example, there may be one category for "good visibility", one for "medium visibility", one for "bad visibility", or with more or less granularity than that, as long as there are at least two categories of different visibilities (or visibility distances).

The device 200 provides, if required, a functionality for changing (as part of e.g. an operation S325 of the method 300) the resolution of the image to match a resolution for which the selected ANN architecture has been trained to perform image analysis. As indicated in Figure 2, this may for example be implemented as one or more downsampling blocks 250-1, 250-2, ..., 250-N, where not all of the shown such blocks may be included.

As envisaged herein, in one example, the ANN architecture 240-1 may be trained/configured to operate on a highest input image resolution and the ANN architecture 240-N may be trained/configured to operate on a lowest input image resolution, while any remaining ANN architectures may be trained/configured to operate on one or more intermediate input image resolutions between the highest and lowest ones. As used herein, "highest" and "lowest" are not to be understand on an absolute level, but only as an indication that a resolution is e.g. a highest or lowest one out of the plurality of different resolutions for which the plurality 240 of ANN architectures has been trained/configured. If the input resolution of the ANN architecture 240-1 for example matches that of the resolution of the images 212, the downsampling block 250-1 may not be required.

As one illustrative example, a resolution of the input image (if expressed as a number of pixels used to capture the scene) may be *X* pixels wide and *Y* pixels high, i.e. *X* × *Y,* and the *i*:th ANN architecture of the ANN architectures 240 may be trained/configured to operate on an input resolution that is *αᵢX* pixels wide and *βᵢY* pixels high, i.e. *αᵢX* × *βᵢY*, where *αᵢ* and *βᵢ* are scaling factors, and the *i*:th downsampling block 250-i may thus be configured to provide a corresponding downsampling of the image. Preferably, these factors are such that the resulting resolution in each dimension is an integer number. In other examples, if the factors are not such, an integer number may be obtained by e.g. rounding the non-integer resolution to for example a nearest integer value, or similar. In some examples, it may be the case that *α*₁ > *α*₂ *>* ··· > *α_{N}* and *β*₁ > *β*₂ > ··· *> β_{N},* and e.g. that *αᵢ = βᵢ* for each *i*. Other examples are of course also possible, e.g. such that at least *α*₁*X* × *β*₁*Y > α*₂*X* × *β*₂Y > ··· *> α_{N}X* × *β_{N}Y,* or similar.

As generally used herein, a "resolution" of an image means a number of pixels that exist within the image, such that a higher-resolution image uses more pixels to represent an object with a higher level of detail, and such that a lower-resolution image uses fewer pixels to represent the same object but with a lower level of detail.

As generally used herein, a "higher-resolution ANN architecture" for example includes a larger number of input neurons, or is in some way configured such that it is harder (in terms of computational effort) to implement. Likewise, a "lower-resolution ANN architecture" includes a smaller number of input neurons, or is in some way configured such that it is easier (in terms of computational effort) to implement. For example, an ANN architecture configured for object detection may have a stack of convolutional layers which takes as input an image of a particular resolution and then reduces the resolution successively in order to gather more and more semantic context. A higher-resolution ANN architecture may for example use a larger first convolutional layer in such a stack, and/or include a larger number of layers in the stack. Likewise, a lower-resolution such architecture may for example use a smaller first convolutional layer in the stack, and/or include a smaller number of layers in the stack. As a consequence, as there are fewer neurons, fewer connections and thus fewer weights to be evaluated when implementing the lower-resolution ANN architecture, the lower-resolution ANN architecture is likely to be easier in terms of computational power to run and use.

For example, for a convolutional neural network (CNN) as used e.g. for object detection, the computational complexity of the network depends on the number of filters, the dimensions of the filters, and the dimensions of the input. A convolution operation may have a complexity of 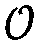 (*XYPQRS*)*,* where *X* and *Y* are the dimensions of the input as described above, where *P* and *Q* are the dimensions of the filter, and where *R* and *S* are the strides of the filter. It can thus be seen that reducing the input dimension also reduces the computational complexity of the network, and that computational resources are thus freed and made available for other tasks.

The device 200 is further configured to then analyze (as part of e.g. an operation S340 of the method 300) the image using the selected ANN architecture, such that different ANN architectures are used for images capturing the scene under different visibility conditions, or at least during visibility conditions being categorized into different visibility categories.

If the image analysis is or includes e.g. object detection, the device 200 may be configured such that the highest-resolution ANN architecture 240-1 is selected for high-visibility conditions, such as those categorized in the "good visibility" category, and that the lowest-resolution ANN architecture 240-N is selected for low-visibility conditions, such as those categorized in the "bad visibility" category, and similar. As already explained herein, this may have the advantage that the ANN architecture 240-N is cheaper, in terms of computational resources, to run while still being able to provide a same or similar result, as the higher resolution often required to detect more distant objects in the scene is no longer required as such objects are any way more likely to be hidden due to the bad visibility. The computational resources thus freed may instead be used for other tasks, and the overall efficiency of the device may thus be improved. Other example image analysis tasks wherein increased levels of e.g. smog and/or fog would help to hide objects that would otherwise require higher-resolution images to detect, and which could thus benefit from the proposed solution, includes e.g. object classification, object segmentation, depth analysis, keypoint detection, and similar.

Obtaining the indication about the visibility of the scene at the time each image was captured may be performed in many ways. For example, information may be provided (e.g. to the visibility estimation block 220) from one or more sensors (illustrated by the dashed block 226) configured to detect e.g. smog, fog, clouding, rain, snow, blizzards, mist, smoke, air-pollution, and/or e.g. a general size and/or concentration of additional particles in the air, or similar. Such sensors may be provided at the scene, as part of the camera, as part of the device 200, and similar. Based on input from such sensors 226, the block 220 may draw conclusions about an actual visibility at the scene, and the control the block 230 such that the right ANN architecture is used.

In other examples, one or more ANN architectures trained specifically for identification of for example fog and/or smog, and/or for determining levels of fog and/or smog, in an image may be used to provide the indication of the visibility of the scene. To reduce the computational efforts spent on running such architectures, it may be sufficient to only estimate the visibility now and then, and not for each new image, such that e.g. a previous indicated visibility is assumed to be valid also for one or more subsequently captured images. For example, the device 200 may be configured to run such an architecture e.g. every minute, every hour, every day, or more frequently or less frequently than that, and similar.

In some examples, the device 200 may be configured to obtain the indication of visibility by analyzing data contained in the image or images 212 it-/themselves, such as looking at contrast and/or edges. It can, for example, be envisaged that when the visibility is lower due to an increased presence of additional particles in the air, such particles will cause additional scattering of light, which will result in the images appearing more blurred than during clear visibility conditions. This may cause a reduce image contrast and reduction of high-frequency components in the image, which can be properly assessed using e.g. edge detection methods.

In some examples, to figure out how the visibility (distance) of the scene depends on e.g. fog and/or smog levels, the device 200 may include a mapping between fog and/or smog level and visibility distance. Such a mapping may be obtained by for example performing controlled experiments in a laboratory environment, wherein e.g. a range of a camera or human eye may be studied for different levels of fog and/or smog, and conclusions drawn about a relationship between visibility distance and fog and/or smog levels.

In other examples, the results of object detection may be analyzed to see at what distance the used algorithm starts to detect objects, and to then correlate this distance with the estimated level of fog and/or smog at the scene. For example, for an object in the scene that is detectable and known to remain stationary in the image, it may be determined when the object detection algorithm starts (or stops) being able to detect the object, and the prevailing fog and/or smog level may be noted and associated with that object and e.g. a known distance between the object and the camera. If there are multiple such objects at different distances from the camera, the process may be repeated in order to generate the mapping.

The mapping itself may include e.g. the use of more or less sophisticated processes, such as the use of linear regression models, Gaussian process regression based on covariance kernels and similar, or any suitable model for estimating e.g. how one or more dependent variables depend on one or more predictor/independent variables, such as e.g. training of a neural network or other machine learning model for such a purpose. For models able to also output e.g. one or more confidence intervals, the device 200 may be configured to e.g. select a higher-resolution ANN architecture even for an indicated lower visibility distance, if the uncertainty for such an indication is indicated as being high (e.g. above a threshold value), in order not to miss e.g. detecting more distant objects that are not, at least not with sufficient certainty, hidden by fog and/or smog.

In some examples, the indication of the visibility may be obtained by making predictions based on previously determined fog and/or smog level patterns. For example, if it is established that it is more likely to be foggy and/or smoggy during certain hours of the day, during certain days of the week, during certain weeks of the year, and so on, an assumption can be made about the visibility at the scene simply based on at what particular time each image is captured, and similar.

As one example, the device 200 may thus be configured such that for the image 101, the ANN architecture 240-1 is used to analyze the image, in order to also detect the more distant vehicle 114. For image 102, the device 200 may instead select the more lower-resolution ANN architecture 240-2, as the higher resolution is not required as the vehicle 114 is likely hidden by the fog and/or smog 130 anyway. For the image 103, the device 200 may instead select an even lower-resolution ANN architecture, which may be even more efficient to implement and still provide the same amount of result, as only the first person 110 is visible and e.g. the second person 112 and vehicle 114 are likely hidden by the more sever fog and/or smog 132.

In other examples, the visibility of the scene at the time each image was captured may instead, or in addition, be derived from e.g. meteorological data, such as data indicative of one or more of temperature, humidity, rainfall, snowfall, e.g. as part of one or more weather forecasts pertinent to the area in which the scene takes place. For example, if such meteorological data indicates that it is, at the time the image is captured, raining or snowing heavily, and/or that it is foggy and/or smoggy, the visibility may be indicated as being e.g. low, with a corresponding low visibility distance, and the device 200 may for example select a lower-resolution ANN architecture for analyzing the image. Likewise, if the data instead indicates that the visibility is good, the device 200 may instead select a higher-resolution ANN architecture in order to also detect objects further away from the camera and which are not likely to be hidden by e.g. fog and/or smog. The meteorological data may also, or instead, include forecasted data for one or more future times later than the capturing time of the image, and such data may be used to estimate what the visibility would be also when the image was captured. Meteorological data may, in some examples, include for example METAR data (or similar) as used by e.g. aircraft pilots, which may include e.g. an indicated visibility distance or at least an indicated visibility category, from which the visibility distance of the scene can be derived.

As envisaged herein, lower visibility may also be caused by other factors than fog and/or smog, such as for example by rain, snow, blizzards, sandstorms, hail storms, tornadoes, flying debris, and/or e.g. also by lack of sunlight or other light, such as during evening or night time, or by any other condition that would make it harder to e.g. detect more distant objects, and for which it would thus be suitable to reduce the computational complexity of the used ANN architecture in order not to waste computational effort when there is little or no advantage to likely be had due to the lower-visibility conditions.

As generally envisaged herein, a mapping may be created between estimated levels of e.g. fog and/or smog, e.g. a level *L*, and a visibility distance (e.g. camera range) *D,* e.g. a mapping *f*:*L* → *D.*

In other examples, the device 200 may for example be configured to only analyze a part of the image, e.g. a part of the image likely to contain more closer objects, by e.g. discarding parts of the image likely to contain more distant objects, and to then feed only the remaining part of the image as input to the selected ANN architecture.

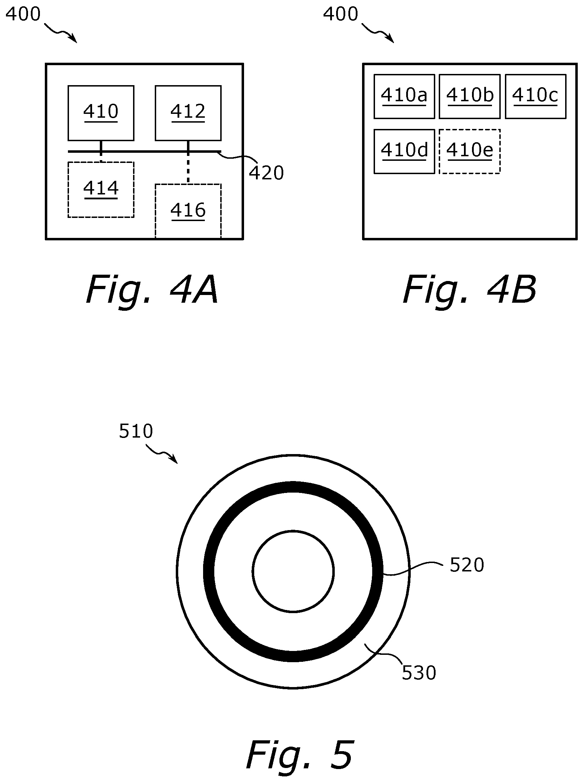

Figure 4A schematically illustrates further examples of a device 400 for performing a method as envisaged herein, i.e. a device (such as a camera) configured to perform the method 300 described with reference to Figure 3. The device 400 includes at least a processor (or "processing circuitry") 410 and optionally a memory 412. As used herein, a "processor" or "processing circuitry" may for example be any combination of one or more of a suitable central processing unit (CPU), multiprocessor, microcontroller (µC), digital signal processor (DSP), application-specific integrated circuit (ASIC), field-programmable gate-array (FPGA), graphics processing unit (GPU), etc., capable of executing software instructions stored in the memory 412. The memory 412 may be external to the processor 410, or may be internal to the processor 410. As used herein, a "memory" may be any combination of random-access memory (RAM) and read-only memory (ROM), or any other kind of memory capable of storing the instructions. The memory 412 contains (i.e. stores) instructions that, when executed by the processor 410, cause the device 400 to perform a method as described herein (i.e. the method 300 or any embodiments thereof). The device 400 may further include one or more additional items 414 which may, in some situations, be useful for performing the method. In some example embodiments, the device 400 may for example be a (video) camera, such as a (video) monitoring camera, and the additional item(s) 414 may then include e.g. an image sensor and for example one or more lenses for focusing light from a scene on the image sensor, such that the monitoring camera may capture images of a scene as part of performing the envisaged method. The additional item(s) 414 may also include e.g. various other electronics components needed for capturing the scene, e.g. to properly operate the image sensor and/or lenses as desired. Performing the method in a monitoring camera may be useful in that the processing is moved to "the edge", i.e. closer to where the actual scene is captured compared to if performing e.g. image analysis somewhere else (such as at a more centralized processing server or similar). The additional item(s) 414 may also include e.g. one or more sensors for detection/estimation of visibility, such as of fog and/or smog levels and similar, such as any of the sensors 226 shown in Figure 2.

The device 400 may for example be connected to a network such that the results from performing the method may be transmitted to a user. For this purpose, the device 400 may include a network interface 416, which may be e.g. a wireless network interface (as defined in e.g. any of the IEEE 802.11 or subsequent standards, supporting e.g. Wi-Fi) or a wired network interface (as defined in e.g. any of the IEEE 802.3 or subsequent standards, supporting e.g. Ethernet). The network interface 416 may for example also support any other wireless standard capable of transferring encoded video, such as e.g. Bluetooth or similar. The various components 410, 412, 414 and 416 (if present) may be connected via one or more communication buses 420, such that these components may communicate with each other, and exchange data as required.

The device 400 may for example be a monitoring camera mounted or mountable on a building, e.g. in form of a PTZ-camera or e.g. a fisheye-camera capable of providing a wider perspective of the scene, or any other type of monitoring/surveillance camera. The device 400 may for example be a body camera, action camera, dashcam, or similar, suitable for mounting on persons, animals and/or various vehicles, or similar. The device 400 may for example be a smartphone or tablet which a user can carry and film a scene. In any such examples of the device 400, it is envisaged that the device 400 may include all necessary components (if any) other than those already explained herein, as long as the device 400 is still able to perform the method 300 or any embodiments thereof as envisaged herein. The various components of the device 400 may in some examples be further configured to implement the various ANN architecture/entity as described herein, such as e.g. the plurality 240, and to implement the various functional blocks (such as 220, 230, etc.) to select which ANN architecture to use for processing of an image based on an estimated visibility distance in the image, and to process the image using the selected ANN architecture.

Figure 4B schematically illustrates one or more embodiments of the device 400 in terms of a number of functional/computing blocks 410a-410d. Each such block 410a-410d is responsible for performing a functionality in accordance with a particular operation of the method 300, as shown in the flowchart of Figure 3. For example, one such functional block 410a may be configured to obtain the input images from the at least one camera (operation S310), another block 410b may be configured to obtain the indication of the actual or assumed visibility at the scene (operation S320), another block 410c may be configured to select which one of the plurality of ANN architectures to use based on the visibility (distance) of the scene (operation S330), and another block 410d may be configured to analyze/process each image using the ANN architecture selected for that image (operation S340). The device 400 may optionally include e.g. one or more additional function blocks 410e, such as e.g. a block for implementing the downscaling of an image to match a resolution/dimension of the input of the selected ANN architecture (operation S325), or similar.

In general terms, each functional module 410a-e may be implemented in hardware or in software. Preferably, one or more or all functional modules 410a-e may be implemented by the processing circuitry 410, possibly in cooperation with the storage medium/memory 412 and/or the communications interface 416. The processing circuitry 410 may thus be arranged to from the memory 412 fetch instructions as provided by a functional module 410a-e, and to execute these instructions and thereby perform any operations of the method 300 performed by/in the device 400 as disclosed herein.

Figure 5 schematically illustrates a computer program product 510 including a computer-readable means/storage medium 530. On the computer storage medium 530, a computer program 520 can be stored, which computer program 520 can cause the processor 410 and thereto operatively coupled entities and devices, such as the communication interface 416 and the memory 412, of the device 400 to execute method 300 according to embodiments described herein with reference to e.g. Figures 1, 2 and 3. The computer program 520 and/or computer program product 510 may thus provide means for performing any operations of the method 300 performed by the device 400 as disclosed herein.

In the example of Figure 5, the computer program product 510 and computer-readable storage medium 530 are illustrated as an optical disc, such as a CD (compact disc) or a DVD (digital versatile disc) or a Blu-Ray disc. The computer program product 510 and computer-readable storage medium 530 could also be embodied as a memory, such as a random-access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 520 is here schematically shown as a track on the depicted optical disk, the computer program 520 may be stored in any way which is suitable for the computer program product 510 and computer-readable storage medium 530.

In summary of all of the above, the present disclosure improves upon contemporary technology by providing a solution which takes into account the visibility distance at the scene (i.e. the range of the camera), and that adaptively selects a lower-resolution ANN architecture for image analysis/processing when the visibility is reduced due to e.g. fog and/or smog, which allows to then free up computational resources for other tasks. This may be particularly useful in e.g. edge devices where the processing resources are more limited than in e.g. servers and similar. An additional benefit of the proposed solution includes that higher-resolution ANN architectures may be more prone to generate false positives (as part of e.g. object detection) in for example foggy and/or smoggy images, compared to their lower-resolution counterparts. This may be particularly true for higher-resolution ANN architectures that have not been specifically trained to e.g. detect objects in foggy and/or smoggy conditions, and the additional image detail/data provided in a higher-resolution image of the scene may thus confuse such a network. Operating on a lower-resolution version of the image using a lower-resolution ANN architecture may thus, in addition to being more computationally efficient, also reduce e.g. the number of such false positives.

Although features and elements may be described above in particular combinations, each feature or element may be used alone without the other features and elements or in various combinations with or without other features and elements. Additionally, variations to the disclosed embodiments may be understood and effected by the skilled person in practicing the claimed invention, from a study of the drawings, the disclosure, and the appended claims.

In the claims, the words "comprising" and "including" does not exclude other elements, and the indefinite article "a" or "an" does not exclude a plurality. The mere fact that certain features are recited in mutually different dependent claims does not indicate that a combination of these features cannot be used to advantage.

### List of reference numerals

- 100: Collection of images captured at different visibility conditions
- 101: Image captured a good/high visibility
- 102: Image captured at medium visibility
- 103: Image captured at bad/low visibility
- 110, 112, 114: Objects
- 120, 122, 124: Object detections/bounding boxes
- 130, 132: Light and heavy fog and/or smog
- 200: Device
- 210: Camera(s)
- 212: Images from camera(s)
- 220: Visibility estimation block
- 226: One or more sensors/additional items
- 230: Demultiplexer/ANN architecture selector
- 240: Plurality of different ANN architectures
- 250: Image downscaling blocks
- 300: Method
- S310-S340: Operations of method
- 400: Device
- 410: Processing circuitry
- 410a-e: Functional blocks/modules
- 412: Memory
- 414: Additional item(s)
- 416: Communication interface
- 420: Communication bus
- 510: Computer program product
- 520: Computer program
- 530: Computer-readable storage medium
- *d*: Visibility distance/camera range

## Claims

1. A computer-implemented method (300) of artificial neural network, ANN, - based analysis of images of a scene captured under different visibility conditions, comprising:
- obtaining (S310) images (212) of a scene captured by one or more cameras (210), and
- for each of said images:
i) obtaining an indication of an actual or assumed visibility at the scene when the image was captured;
ii) selecting, based on the indicated visibility, an ANN architecture from a plurality of ANN architectures, wherein the ANN architectures are each trained for image analysis but configured for different input image resolutions, and
iii) analyzing the image using the selected ANN architecture, comprising changing, if necessary, a resolution of the image to match that of the selected ANN architecture,
wherein selecting the ANN architecture comprises selecting a lower-resolution ANN architecture for a lower visibility and a higher-resolution ANN architecture for a higher visibility, and wherein the lower-resolution ANN architecture is configured such that its operation consumes less computer processing resources and/or time than the higher-resolution ANN architecture.

2. The method according to claim 1, wherein said analyzing comprises performing at least one of object detection, object classification, object segmentation, depth analysis, and keypoints detection, in the image.

3. The method according to claim 1 or 2, wherein obtaining the indication of the visibility comprises detecting fog and/or smog levels in the scene.

4. The method according to claim 3, wherein detecting fog and/or smog levels in the scene comprises evaluating contrast and/or edges in the image.

5. The method according to claim 3 or 4, wherein obtaining the indication of the visibility comprises using a mapping of detected fog and/or smog levels to visibility distance.

6. The method according to any one of claims 3 to 5, wherein obtaining the indication of the visibility comprises making predictions based on previously determined fog and/or smog level patterns.

7. The method according to any one of the preceding claims, wherein obtaining the indication of the visibility comprises the use of current and/or historical meteorological data pertinent to the scene.

8. A camera (210, 400), comprising:
- at least one image sensor for capturing images of a scene;
- processing circuitry (410) configured to, for each of multiple images captured by the at least one image sensor:
i) obtain an indication of an actual or assumed visibility at the scene when the image was captured;
ii) select, based on the indicated visibility, an artificial neural network, ANN, architecture from a plurality (240) of ANN architectures, wherein the ANN architectures are each trained for image analysis but configured for different input image resolutions, and
iii) analyze the image using the selected ANN architecture, comprising to change, if necessary, a resolution of the image to match that of the selected ANN architecture,
wherein to select the ANN architecture comprises to select a lower-resolution ANN architecture for a lower visibility and a higher-resolution ANN architecture for a higher visibility, and wherein the lower-resolution ANN architecture is configured such that its operation consumes less computer processing resources and/or time than the higher-resolution ANN architecture.

9. The camera according to claim 8, wherein the processing circuitry is further configured to perform the method according to any one of claims 2 to 7.

10. A computer program (520) comprising computer code that, when run on processing circuitry (410) of a device (200, 410) such as a camera, causes the device to:
- obtain images (212) of a scene, and
- for each of said images:
i) obtain an indication of an actual or assumed visibility at the scene when the image was captured;
ii) select, based on the indicated visibility, an artificial neural network, ANN, architecture from a plurality (240) of ANN architectures, wherein the ANN architectures are each trained for image analysis but configured for different input image resolutions, and
iii) analyze the image using the selected ANN architecture, comprising to change, if necessary, a resolution of the image to match that of the selected ANN architecture,
wherein to select the ANN architecture comprises to select a lower-resolution ANN architecture for a lower visibility and a higher-resolution ANN architecture for a higher visibility, and wherein the lower-resolution ANN architecture is configured such that its operation consumes less computer processing resources and/or time than the higher-resolution ANN architecture.

11. The computer program according to claim 10, wherein the computer code is further such that it causes the device to perform the method (300) according to any one of claims 2 to 9.

12. A computer program product (510), comprising a computer-readable storage medium (530) on which the computer program (520) according to claim 10 or 11 is stored.

## Patentansprüche

1. Computerimplementiertes Verfahren (300) zur auf einem künstlichen neuronalen Netzwerk (ANN) basierenden Analyse von unter verschiedenen Sichtbarkeitsbedingungen aufgenommenen Bildern einer Szene, aufweisend:
- Erlangen (S310) von von einer oder mehreren Kameras (210) aufgenommenen Bildern (212) einer Szene, und
- für jedes der Bilder:
i) Erlangen einer Angabe einer tatsächlichen oder angenommenen Sichtbarkeit in der Szene zur Zeit der Bildaufnahme;
ii) Auswählen einer ANN-Architektur aus einer Mehrzahl von ANN-Architekturen auf der Grundlage der angegebenen Sichtbarkeit, wobei die ANN-Architekturen jeweils für die Bildanalyse trainiert, jedoch für unterschiedliche Eingabebildauflösungen ausgelegt sind, und
iii) Analysieren des Bildes unter Verwendung der ausgewählten ANN-Architektur, aufweisend bei Bedarf das Ändern einer Auflösung des Bildes so, dass sie derjenigen der ausgewählten ANN-Architektur entspricht,
wobei das Auswählen der ANN-Architektur das Auswählen einer ANN-Architektur mit geringerer Auflösung für eine geringere Sichtbarkeit und einer ANN-Architektur mit höherer Auflösung für eine höhere Sichtbarkeit aufweist, und wobei die ANN-Architektur mit geringerer Auflösung so ausgelegt ist, dass ihr Betrieb weniger Rechenverarbeitungsressourcen und/oder Zeit verbraucht als die ANN-Architektur mit höherer Auflösung.

2. Verfahren nach Anspruch 1, wobei das Analysieren das Durchführen von mindestens einem von Objektdetektion, Objektklassifizierung, Objektsegmentierung, Tiefenanalyse und Schlüsselpunktdetektion in dem Bild aufweist.

3. Verfahren nach Anspruch 1 oder 2, wobei das Erlangen der Sichtbarkeitsangabe das Detektieren von Nebel- und/oder Smoggraden in der Szene aufweist.

4. Verfahren nach Anspruch 3, wobei das Detektieren von Nebel- und/oder Smoggraden in der Szene das Auswerten von Kontrast und/oder Kanten in dem Bild aufweist.

5. Verfahren nach Anspruch 3 oder 4, wobei das Erlangen der Sichtbarkeitsangabe das Verwenden einer Zuordnung der detektierten Nebel- und/oder Smoggrade zu der Sichtweite aufweist.

6. Verfahren nach einem der Ansprüche 3 bis 5, wobei das Erlangen der Sichtbarkeitsangabe das Treffen von Vorhersagen auf der Grundlage zuvor bestimmter Nebel- und/oder Smoggradmuster aufweist.

7. Verfahren nach einem der vorgehenden Ansprüche, wobei das Erlangen der Sichtbarkeitsangabe die Verwendung aktueller und/oder historischer meteorologischer Daten aufweist, die für die Szene relevant sind.

8. Kamera (210, 400), aufweisend:
- mindestens einen Bildsensor zum Aufnehmen von Bildern einer Szene;
- eine Verarbeitungsschaltungsanordnung (410), die dazu ausgelegt ist, für jedes der mehreren von dem mindestens einen Bildsensor aufgenommenen Bilder auszuführen:
i) Erlangen einer Angabe einer tatsächlichen oder angenommenen Sichtbarkeit in der Szene zur Zeit der Bildaufnahme;
ii) Auswählen einer Architektur eines künstlichen neuronalen Netzwerkes (ANN) aus einer Mehrzahl (240) von ANN-Architekturen auf der Grundlage der angegebenen Sichtbarkeit, wobei die ANN-Architekturen jeweils für die Bildanalyse trainiert, jedoch für unterschiedliche Eingabebildauflösungen ausgelegt sind, und
iii) Analysieren des Bildes unter Verwendung der ausgewählten ANN-Architektur, aufweisend bei Bedarf das Ändern einer Auflösung des Bildes so, dass sie derjenigen der ausgewählten ANN-Architektur entspricht,
wobei das Auswählen der ANN-Architektur das Auswählen einer ANN-Architektur mit geringerer Auflösung für eine geringere Sichtbarkeit und einer ANN-Architektur mit höherer Auflösung für eine höhere Sichtbarkeit aufweist, und wobei die ANN-Architektur mit geringerer Auflösung so ausgelegt ist, dass ihr Betrieb weniger Rechenverarbeitungsressourcen und/oder Zeit verbraucht als die ANN-Architektur mit höherer Auflösung.

9. Kamera nach Anspruch 8, wobei die Verarbeitungsschaltungsanordnung ferner dazu ausgelegt ist, das Verfahren nach einem der Ansprüche 2 bis 7 auszuführen.

10. Computerprogramm (520), das einen Computercode aufweist, der bei Ausführung auf einer Verarbeitungsschaltungsanordnung (410) einer Vorrichtung (200, 410), wie etwa einer Kamera, die Vorrichtung zu Folgendem veranlasst:
- Erlangen von Bildern (212) einer Szene und
- für jedes der Bilder:
i) Erlangen einer Angabe einer tatsächlichen oder angenommenen Sichtbarkeit in der Szene zur Zeit der Bildaufnahme;
ii) Auswählen einer Architektur eines künstlichen neuronalen Netzwerkes (ANN) aus einer Mehrzahl (240) von ANN-Architekturen auf der Grundlage der angegebenen Sichtbarkeit, wobei die ANN-Architekturen jeweils für die Bildanalyse trainiert, jedoch für unterschiedliche Eingabebildauflösungen ausgelegt sind, und
iii) Analysieren des Bildes unter Verwendung der ausgewählten ANN-Architektur, aufweisend bei Bedarf das Ändern einer Auflösung des Bildes so, dass sie derjenigen der ausgewählten ANN-Architektur entspricht,
wobei das Auswählen der ANN-Architektur das Auswählen einer ANN-Architektur mit geringerer Auflösung für eine geringere Sichtbarkeit und einer ANN-Architektur mit höherer Auflösung für eine höhere Sichtbarkeit aufweist, und wobei die ANN-Architektur mit geringerer Auflösung so ausgelegt ist, dass ihr Betrieb weniger Rechenverarbeitungsressourcen und/oder Zeit verbraucht als die ANN-Architektur mit höherer Auflösung.

11. Computerprogramm nach Anspruch 10, wobei der Computercode ferner so beschaffen ist, dass er die Vorrichtung veranlasst, das Verfahren (300) nach einem der Ansprüche 2 bis 9 auszuführen.

12. Computerprogrammprodukt (510), aufweisend ein computerlesbares Speichermedium (530), auf dem das Computerprogramm (520) nach Anspruch 10 oder 11 gespeichert ist.

## Revendications

1. Procédé mis en œuvre par ordinateur (300) d'analyse d'images basée sur un réseau neuronal artificiel, ANN, d'une scène capturée dans différentes conditions de visibilité, le procédé comprenant les étapes suivantes :
- obtenir (S310) des images (212) d'une scène capturée par une ou plusieurs caméras (210), et
- pour chacune desdites images :
i) obtenir une indication de la visibilité réelle ou présumée sur la scène lorsque l'image a été capturée ;
ii) sélectionner, sur la base de la visibilité indiquée, une architecture ANN parmi une pluralité d'architectures ANN, les architectures ANN étant chacune entraînées pour l'analyse d'image mais configurées pour différentes résolutions d'image d'entrée, et
iii) analyser l'image en utilisant l'architecture ANN sélectionnée, ce qui comprend de changer, si nécessaire, une résolution de l'image pour qu'elle corresponde à celle de l'architecture ANN sélectionnée,
où la sélection de l'architecture ANN comprend la sélection d'une architecture ANN de résolution inférieure pour une visibilité inférieure et d'une architecture ANN de résolution supérieure pour une visibilité supérieure, et où l'architecture ANN de résolution inférieure est configurée de telle sorte que son fonctionnement consomme moins de ressources de traitement informatique et/ou de temps que l'architecture ANN de résolution supérieure.

2. Procédé selon la revendication 1, dans lequel ladite analyse comprend l'exécution d'au moins une parmi une détection d'objet, une classification d'objet, une segmentation d'objet, une analyse de profondeur et une détection de points clés, dans l'image.

3. Procédé selon la revendication 1 ou la revendication 2, dans lequel l'obtention de l'indication de la visibilité comprend la détection de niveaux de brouillard et/ou de smog dans la scène.

4. Procédé selon la revendication 3, dans lequel la détection de niveaux de brouillard et/ou de smog dans la scène comprend l'évaluation du contraste et/ou des bords dans l'image.

5. Procédé selon la revendication 3 ou la revendication 4, dans lequel l'obtention de l'indication de la visibilité comprend l'utilisation d'une correspondance entre des niveaux détectés de brouillard et/ou de smog et une distance de visibilité.

6. Procédé selon l'une quelconque des revendications 3 à 5, dans lequel l'obtention de l'indication de la visibilité comprend la réalisation de prédictions basées sur des modèles de niveau de brouillard et/ou de smog précédemment déterminés.

7. Procédé selon l'une quelconque des revendications précédentes, dans lequel l'obtention de l'indication de la visibilité comprend l'utilisation de données météorologiques actuelles et/ou historiques pertinentes pour la scène.

8. Caméra (210, 400), comprenant :
- au moins un capteur d'image pour capturer des images d'une scène ;
- des circuits de traitement (410) configurés pour, pour chacune des multiples images capturées par l'au moins un capteur d'image :
i) obtenir une indication d'une visibilité réelle ou présumée sur la scène lorsque l'image a été capturée ;
ii) sélectionner, sur la base de la visibilité indiquée, une architecture de réseau neuronal artificiel, ANN, parmi une pluralité (240) d'architectures ANN, les architectures ANN étant chacune entraînées pour l'analyse d'image mais configurées pour différentes résolutions d'image d'entrée, et
iii) analyser l'image en utilisant l'architecture ANN sélectionnée, ce qui comprend de changer, si nécessaire, une résolution de l'image pour qu'elle corresponde à celle de l'architecture ANN sélectionnée,
où sélectionner l'architecture ANN comprend de sélectionner une architecture ANN de résolution inférieure pour une visibilité inférieure et une architecture ANN de résolution supérieure pour une visibilité supérieure, et où l'architecture ANN de résolution inférieure est configurée de telle sorte que son fonctionnement consomme moins de ressources de traitement informatique et/ou de temps que l'architecture ANN de résolution supérieure.

9. Caméra selon la revendication 8, les circuits de traitement étant en outre configurés pour exécuter le procédé selon l'une quelconque des revendications 2 à 7.

10. Programme d'ordinateur (520) comprenant un code informatique qui, lorsqu'il est exécuté sur des circuits de traitement (410) d'un dispositif (200, 410) tel qu'une caméra, amène le dispositif à :
- obtenir des images (212) d'une scène, et
- pour chacune desdites images :
i) obtenir une indication d'une visibilité réelle ou présumée sur la scène lorsque l'image a été capturée ;
ii) sélectionner, sur la base de la visibilité indiquée, une architecture de réseau neuronal artificiel, ANN, parmi une pluralité (240) d'architectures ANN, les architectures ANN étant chacune entraînées pour l'analyse d'image mais configurées pour différentes résolutions d'image d'entrée, et
iii) analyser l'image en utilisant l'architecture ANN sélectionnée, ce qui comprend de changer, si nécessaire, une résolution de l'image pour qu'elle corresponde à celle de l'architecture ANN sélectionnée,
où sélectionner l'architecture ANN comprend de sélectionner une architecture ANN de résolution inférieure pour une visibilité inférieure et une architecture ANN de résolution supérieure pour une visibilité supérieure, et où l'architecture ANN de résolution inférieure est configurée de telle sorte que son fonctionnement consomme moins de ressources de traitement informatique et/ou de temps que l'architecture ANN de résolution supérieure.

11. Programme informatique selon la revendication 10, dans lequel le code informatique est en outre tel qu'il amène le dispositif à exécuter le procédé (300) selon l'une quelconque des revendications 2 à 9.

12. Programme informatique (510), comprenant un support de stockage lisible par ordinateur (530) sur lequel est stocké le programme informatique (520) selon la revendication 10 ou la revendication 11.
